(19) Europäisches Patentamt
European Patent Office
Office européen des brevets

(11) **EP 3 059 844 A1**

(12) **EUROPEAN PATENT APPLICATION**

(43) Date of publication:
**24.08.2016 Bulletin 2016/34**

(51) Int Cl.:
***H02M 3/158*** (2006.01)   ***H02M 3/156*** (2006.01)

(21) Application number: **16151462.5**

(22) Date of filing: **15.01.2016**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA MD**

(30) Priority: **20.02.2015 US 201514626986**

(71) Applicant: **Zentrum Mikroelektronik Dresden AG 01109 Dresden (DE)**

(72) Inventor: **Young, Chris Round Rock, TX Texas 78681 (US)**

(74) Representative: **Lippert, Stachow & Partner Patentanwälte Krenkelstrasse 3 01309 Dresden (DE)**

(54) **PULSE TRANSLATION MODULATION FOR POWER CONVERTERS**

(57) The present invention relates a control method for a power converter comprising a switched power stage configured to generate an output voltage from an input voltage according to a pulsed control signal controlling a switching of the switched power stage in dependence of a voltage error signal, the voltage error signal being a difference between a reference voltage and the output voltage. The method comprises generating a cyclic ramp signal and generating the pulsed control signal by triggering a pulse of the pulsed control signal when a ramp of the cyclic ramp signal intersects (equals) the voltage error signal to control a pulse position. The control method provides a pulse translation technique to control charge and thus the inductor current in a cycle. In contrast to a modulation technique based on compensation that adjusts the duty cycle of the PWM control signal, a pulse of a nominally unaltered pulse width is just translated in time.

## Fig. 5

**Description**

FIELD OF THE INVENTION

The present invention relates to a pulse translation modulation technique for power converters that does not require compensation and a corresponding power converter implementing the pulse translation modulation technique.

BACKGROUND OF THE INVENTION

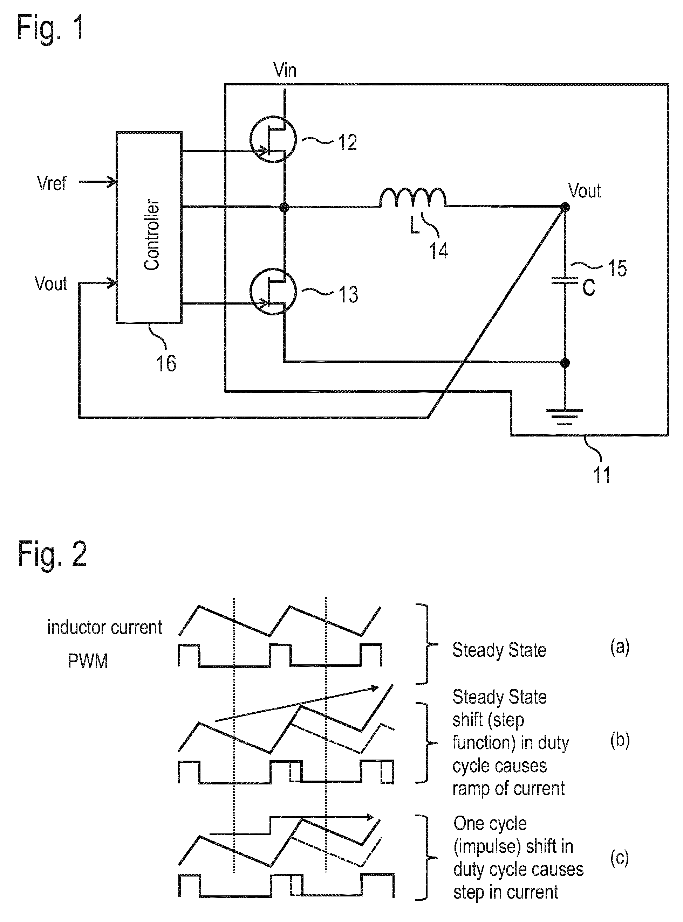

Switched DC-DC converters comprise a switchable power stage, wherein an output voltage is generated according to a switching signal and an input voltage. The switching signal is generated in a digital control circuit that adjusts the output voltage to a reference voltage. A buck converter is shown in Fig. 1. The switched power stage 11 comprises a dual switch consisting of a high-side field effect transistor (FET) 12 and a low-side FET 13, an inductor 14 and a capacitor 15. During a charge phase, the high-side FET 12 is turned on and the low-side FET 13 is turned off by the switching signal to charge the capacitor 15. During a discharge phase the high-side FET 12 is turned off and the low-side FET 13 is turned on to match the average inductor current to the load current.
The switching signal is generated as pulse width modulation signal as shown in Fig. 2 (a) with a duty cycle determined by the controller 16. A steady state shift, i.e. a step function, in the duty cycle causes the inductor current to ramp up as shown in Fig. 2 (b). A single cycle shift, i.e. an impulse, in the duty cycle causes a step in the inductor current as shown in Fig. 2 (c). Pulse width modulation typically requires compensation that is implemented by the controller 16.
In voltage mode control the controller 16 typically implements a PID (proportional, integral, differential) compensator to adjust the effective (average) input voltage via the duty cycle that times the input voltage. Voltage mode control adjusts the duty cycle in some proportion to the voltage error $v_e$. The duty cycle, thus the effective input voltage, is controlled by a part that is proportional to the voltage error (kp), proportional to the integral (ki) of the voltage error, and proportional to the derivative of the voltage error.
The duty cycle can be determined from the following control law: *duty cycle = $kp \cdot v_e + ki \cdot \int v_e dt + kd \cdot dv_e/dt$*
In voltage mode control, the transfer function of the power plant has three poles, one at zero, one that is due to the inductor and one that is due to the capacitor. Each pole introduces a 90° phase-shift. Any system exhibiting less than 180° phase shift is inherently stable, otherwise it needs to be compensated. The compensator introduces zeros to the corresponding poles as each zero introduces a 90° phase-shift counterclockwise to a pole. The values of kp, ki and kd are selected judiciously to insure stability and adequate transient response. This requires knowledge of plant parameters as inductance of the inductor or capacitance and equivalent series resistance of the capacitor. Hence, the compensator for voltage mode control needs to be designed for or adjusted to actual values of the plant parameters to guarantee stable control. The actual values may not be known to a user or may drift over time due to component aging. Hence, they need to be determined causing hardware overhead.
Alternatively, an inherently stable control mechanism may be chosen. A transfer function having only one pole is inherently stable and thus does not require any compensation.

DISCLOSURE OF THE INVENTION

Hence, what is needed is a solution that eliminates two poles. This solution is achieved with a control method according to the independent method claim and a power controller according to the independent apparatus claim.
The present invention relates a control method for a power converter comprising a switched power stage configured to generate an output voltage from an input voltage according to a pulsed control signal controlling a switching of the switched power stage in dependence of a voltage error signal, the voltage error signal being a difference between a reference voltage and the output voltage. The method comprises generating a cyclic ramp signal and generating the pulsed control signal by triggering a pulse of the pulsed control signal when a ramp of the cyclic ramp signal intersects (equals) the voltage error signal to control a pulse position.
In steady state, i.e. when a constant voltage error signal is present, the pulsed control signal thus generated resembles a constant frequency PWM signal due to the cyclic nature of the ramp signal.
When a shift in the voltage error signal in positive direction occurs, a ramp having a negative slope is intersected earlier compared to the steady state. Hence, a pulse is triggered earlier compared to the pulse triggered in steady state. Therefore, the pulsed control signal resembles a constant frequency PWM signal with a pulse translated forward in phase relative to the steady state pulse. As the pulse is translated forward in time, a charge in the corresponding cycle and consequently the inductor current is increased.
When a shift in the voltage error signal in negative direction occurs, a ramp having a negative slope is intersected later compared to the steady state. Hence, a pulse is triggered later compared to the pulse triggered in steady state.

Therefore, the pulsed control signal resembles a constant frequency PWM signal with a pulse translated backward in phase relative to the steady state pulse. As the pulse is translated backward in time, a charge in the corresponding cycle and consequently the inductor current is decreased.

Hence, the control method provides a pulse translation technique to control charge and thus the inductor current in a cycle. In contrast to a modulation technique based on compensation that adjusts the duty cycle of the PWM control signal, a pulse of a nominally unaltered pulse width is just translated in time.

As pulses of the pulsed control signal shall only be translated forward or backward in phase compared to the steady state but shall not be duplicated due to reasons of stability, triggering a pulse of the pulsed control signal may comprise discarding a ramp of the cyclic ramp signal when the ramp has formerly intersected the voltage error signal. Otherwise, a ramp that has formerly intersected the voltage errors signal might trigger another pulse, for example if the error voltage signal returns to the steady state level before the ramp reaches this level, thus leading to a duplication of the pulse which is undesirable. By discarding a ramp that has formerly intersected the voltage error signal it can be guaranteed that the inductor current returns to its steady state level after a transient has taken place, thus providing a stable control.

As already mentioned a transfer function having only one pole is inherently stable and thus does not require any compensation. Hence, to be compensation free, two of three poles need to be removed. The pole at zero can be effectively eliminated at mid to high frequencies by splitting the control signal, i.e. the error voltage signal, into two paths, a slow path, i.e. an integral path, to set the direct current and a fast path that is used for transients. Because the gain of the integral path falls off with frequency, for high frequencies, the fast path dominates thus eliminating the pole.

Therefore, a nominal pulse width of the pulsed control signal, i.e. the pulse width for the continuous conduction mode (CCM), may be determined by using the slow integral path of the voltage error signal. The method may comprise determining a steady state pulse width of a pulse of the pulsed control signal by integrating a steady state voltage error signal.The nominal pulse width is thus determined to give a zero integral of the voltage error. This integral process is insensitive to noise and provides an integral value over a large range of values and plant parameters.

The steady state pulse width may be determined prior to generating the pulsed control signal. Then, the nominal pulse width of the pulsed control signal, including any translated pulses, may be set to the thus determined steady state pulse width.

With conventional PWM control, the pulse width is modulated as a function of the voltage error. The inductor current is proportional to the integral of the pulse width deviation from steady state. This is the source of the pole for the inductor. It can be eliminated by current mode control.

Alternatively, the inductor current may be adjusted to the voltage error by the technique of pulse translation as described above. Hence, determining the position of a pulse of the pulsed control signal according to a fast path of the voltage error signal and determining the pulse width of the pulsed control signal according to a slow integral path of the voltage error signal provides a compensation free control method that behaves much like current mode hysteretic except constant frequency. It provides, unlike voltage mode control, a bounded response to the voltage error. Thus, this technique is robust and stable.

In order to allow for a sufficient inductor current to build up in a cycle to compensate for larger transients in the voltage error, several pulses may need to be translated into the cycle. A technique that addresses this issue is the concept of multiple ramps of the cyclic ramp signal.

Generally, the cyclic ramp signal may be generated by generating a plurality of time-shifted voltage ramps having an identical slope, wherein the time elapsed between two consecutive voltage ramps at the same level is identical.

Specifically, the cyclic ramp signal may be generated such that a predefined number of ramps are present at any instance of time within a steady state cycle of the cyclic ramp signal. The steady state cycle is defined as the time elapsed between two consecutive pulses of the pulsed control signal at the same level generated for a steady state voltage error signal. With each additional ramp that is present at any instance of time, the charge in the corresponding cycle may be further increased or decreased compared to the single ramp case. Increasing charge in a cycle leads to an increase of the inductor current.

A maximum inductor current required to correct for a voltage deviation may be expressed in terms of an increase of a multiple of the inductor ripple current $I_R$. From the increase of the maximum inductor current $I_{shiftmax}$ and the ripple current $I_R$, the number N of ramps needed may be determined from $I_{shiftmax}=I_R N/2 (1-d)$ for $d \leq \frac{1}{2}$ or $I_{shiftmax}=I_R N$ for $d \geq \frac{1}{2}$, wherein d is the duty ratio of the pulsed control signal.

The number of ramps N needed can be easily generated by adjusting the slope of all ramps equally. Therefore, generating the cyclic ramp signal may comprise adjusting a slope of all ramps of the cyclic ramp signal such that the predefined number of ramps N is present at any instance of time within the steady state cycle of the cyclic ramp signal.

When multiple ramps have been generated and a load transient occurs, leading to an instantaneous shift of the voltage error signal from its steady state level to some higher level, at this instance of time, several ramps may be intersected. In order to allow for a high inductor current to build up, several pulses need to be translated forward in phase, but the pulses need to occur consecutively, i.e. one after another on a time axis.

When the error voltage signal intersects a first ramp, a pulse of the pulse control signal is triggered. At the instance of time, when the thus triggered pulse is present, another ramp may be intersected. Then, the duration of the pulse needs to be extended by its nominal pulse width, e.g. the steady state pulse width. At the instance of time, when the thus extended pulse is present, still another ramp may be intersected. Then, the duration of the extended pulse needs to be extended again by the nominal pulse width, e.g. the steady pulse width.

Hence, the method may comprise extending the duration of a pulse of the pulsed control by a nominal pulse width instead of triggering a pulse of the pulsed control signal for each additional ramp of the cyclic ramp signal intersecting the voltage error signal at an instance of time when a pulse of the pulsed control signal is present.

If there is a steady state shift in current, then each cycle needs an increase or decrease in charge. This will result in a steady state shift in the pulse position. This steady state or even quasi-steady state shift can be detected and the pulse width momentarily increased or decreased as described above to offset the translation.

That is, for example, if the pulse has a steady state position that is advanced in time relative to its original position, then the pulse can be increased for a single cycle, or even multiple cycles, as needed to restore the steady state pulse position to its original value.

Therefore, the method may further comprise attempting to detect a steady state or quasi-steady state shift in current and adjusting the pulse width to offset a pulse translation resulting from a steady state or quasi-steady state shift when a steady state or quasi-steady state shift has been detected.

Furthermore, a power converter can be operated either in continuous-conduction-mode (CCM) or in discontinuous conduction mode. (CCM) means that the current in the energy transfer inductor substantially never goes to zero between switching cycles, although it may cross zero current going from positive to negative current. In DCM the current goes to zero and remains at zero during part of the switching cycle.

The control method described so far addresses the CCM. However, it may be augmented to DCM by a method of charge mode control to further adjust the nominal pulse width of the pulsed control. In charge mode control systems, the control method adjusts the charge per cycle as function of the voltage error. Charge mode control reduces the order of the system by two compared to voltage mode control. Hence, only a proportional gain term is needed. The charge Q is proportional to the voltage error $v_e$ and the constant of proportionality is kp. The charge control equation is given by: $Q=kp \cdot v_e$.

The charge Q is proportional to the square of the pulse width: $Q = t_p^2 K$, wherein K is a constant. Hence,

$$Q = t_p^2 K = kp \cdot v_e .$$

Therefore, the charge may be increased or decreased by varying a pulse width of the pulsed control signal so that a square of the pulse width varies in dependence of a voltage error. This is a predictive method of charge control as the charge to be delivered in a cycle depends on the voltage error and the square of the pulse width. In contrast to traditional charge mode control, wherein the charge as it is delivered is measured and the pulse would be terminated when the measured charge equaled the required value, by this predictive method, the charge to be delivered is predicted by system parameters and the programmed pulse width. Hence, no charge needs to be measured and no fast decisions need be made about terminating a pulse except the a priori decision to terminate a pulse as predicted by this predictive method.

Specifically, the method may comprise varying the pulse width of the pulsed control signal such that a resulting charge Q of a capacitance of the switchable power stage is given by

$$Q = \frac{V_{in} - V_{out}}{2L} \left( \frac{V_{in}}{V_{out}} \right) t_p^2 ,$$

wherein $V_{in}$ is the input voltage, $V_{out}$ is the output voltage, L is an inductance of the switchable power stage and $t_p$ is the pulse width of the pulsed control signal.

When a steady pulse width $t_{ss}$ is determined otherwise, the method may comprise varying the pulse width of the pulse control signal by augmenting the steady state pulse width $t_{ss}$ by an additional on-time $t_d$ such that an additional charge $Q_d$ of a capacitance of the switchable power stage is given by

$$Q_d = \frac{V_{in} - V_{out}}{2L} \left( \frac{V_{in}}{V_{out}} \right) t_d [2t_{ss} - t_d] \approx \frac{V_{in} - V_{out}}{2L} \left( \frac{V_{in}}{V_{out}} \right) t_d t_{ss} .$$

In buck derived converters as shown in Fig. 1 the major effect is that when it changes from CCM to DCM, it goes from one control law to another control law. In boost and buck-boost derived systems there is a right-half-plane zero in CCM which is not present in the DCM. This makes it much more difficult to stabilize these converters with good dynamic response.

As DCM regulation therefore typically requires compensation that is different from CCM, transition from discontinuous to continuous conduction mode requires a rapid controlled change in compensation. As the proposed method described above is compensation free it relieves this problem.

The present invention further relates to a power converter comprising a switched power stage configured to generate an output voltage from an input voltage and a controller configured to generate a pulsed control signal for switching the switched power stage in dependence of a voltage error signal. The voltage error signal is a difference between a reference voltage and the output voltage. The controller is configured to generate a cyclic ramp signal. The controller is further configured to generate the pulsed control signal by triggering a pulse of the pulsed control signal when a ramp of the cyclic ramp signal intersects (equals) the voltage error signal to control a pulse position.

BRIEF DESCRIPTION OF THE DRAWINGS

Reference will be made to the accompanying drawings, wherein

Fig. 1       shows a prior art switching buck converter;

Fig. 2       shows a diagram showing an inductor current and a PWM switching signal of a switchable power stage operated in prior art voltage mode control;

Fig. 3       shows a diagram showing an inductor current and pulse width modulation (PWM) switching signal of a switchable power stage operated in a compensation free method of pulse translation charge control;

Fig. 4       shows a diagram showing an inductor current and a pulsed control signal of a switchable power stage operated in CCM pulse translation modulation;

Fig. 5       shows a block diagram of a controller configured to generate the pulsed control signal by CCM and DCM pulse translation modulation;

Fig. 6       shows a diagram showing a ramp signal; the pulsed control signal and the inductor current for steady state pulse position modulation;

Fig. 7       shows a diagram showing a ramp signal; the pulsed control signal and the inductor current for a single ramp pulse position modulation;

Fig. 8       shows a diagram showing a ramp signal; the pulsed control signal and the inductor current for a two ramp pulse position modulation;

Fig. 9       shows a diagram showing a ramp signal; the pulsed control signal and the inductor current for a three ramp pulse position modulation;

Fig. 10      shows a diagram showing a ramp signal; the pulsed control signal and the inductor current for a four ramp pulse position modulation;

Fig. 11      shows a diagram showing a ramp signal; the pulsed control signal and the inductor current for a five ramp pulse position modulation;

Fig. 12      shows a diagram showing a ramp signal; the pulsed control signal and the inductor current for a six ramp pulse position modulation;

Fig. 13      shows a diagram showing the inductor current for a load transient;

Fig. 14      shows a diagram showing the inductor current in comparison with regards to the number ramps;

Fig. 15      shows a diagram showing an inductor current and a pulsed control signal of a switchable power stage operated in DCM; and

Fig. 16    shows a diagram showing an inductor current and a pulsed control signal of a switchable power stage operated in DCM with pre-determined steady state duty cycle.

## DETAILED DESCRIPTION OF THE INVENTION

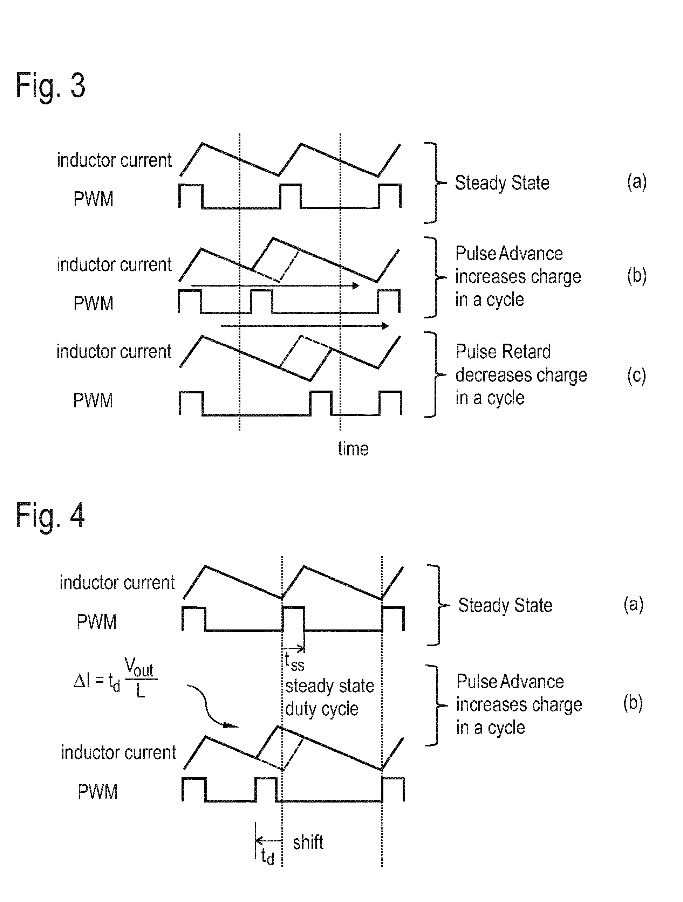

A power converter as shown in Fig. 1 is operated in a compensation free method of charge control. The controller 16 generates a PWM control signal for switching the switchable power stage, wherein the pulsed control signal is forwarded to the high-side FET 12 and the complement of the control signal is forwarded to the low side FET 13. The controller 16 generates a pulsed control signal that resembles a constant frequency PWM control signal as shown in Fig. 3 (a) for the steady state.

When a load transient occurs, the controller generates a pulsed control signal that resembles a constant frequency PWM control signal with a pulse 32, 33 translated in phase compared to steady state pulse 31 as shown in Fig. 3 (b) and Fig. 3 (c). The vertical dotted lines indicate the boundary of a cycle.

To increase the charge in a cycle, the controller 16 advances the pulse 32 as shown in Fig. 3 (b). The dotted line indicates the inductor current for the constant frequency control signal in comparison with the solid line that indicates the inductor current for the translated pulse forward in time.

To decrease the charge in a cycle, the controller 16 retards the pulse 33 as shown in Fig. 3 (c). The dotted line indicates the inductor current for the constant frequency control signal in comparison with the solid line that indicates the inductor current for the translated pulse backward in time. The area bounded by the dotted line and solid line is proportional to the change of charge in a cycle.

Fig. 4 shows a comparison between the steady state as shown in Fig. 4 (a) and a load transient as shown in Fig. (4). A pulse having a steady state pulse width $t_{ss}$ is advanced by $t_d$ to increase charge in the cycle indicated by the vertical dotted lines. This leads to an increase $\Delta I$ of the inductor current as given by the following equation: $\Delta I = t_d V_{out}/L$, wherein $V_{out}$ is the output voltage and L is the inductance of the inductor.

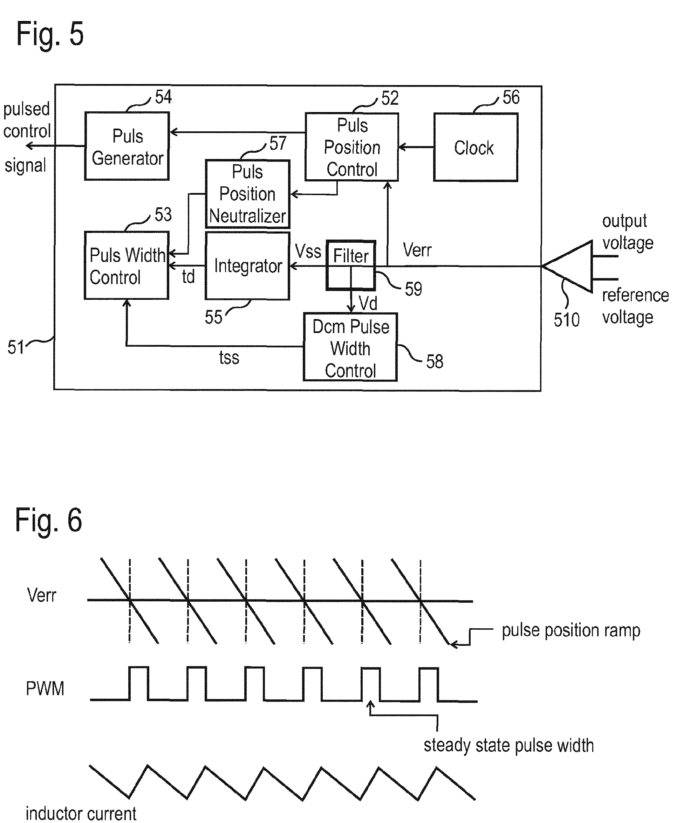

A block diagram of the controller 51 for determining the pulsed control signal is shown in Fig. 5. Each pulse of the pulsed control signal is defined by its pulse position and pulse width. Pulse position control block 52 determines the pulse position and communicates it to the pulse generator 54. Pulse width control block 53 determines the nominal pulse width and communicates it to the pulse generator 54. The pulse generator 54 generates the pulsed control signal based on the pulse position and based on the nominal pulse width.

The voltage error generated by error amplifier 510 is processed to determine the steady state pulse width in a slow control path comprising the filter 59 and the integrator 55 for the CCM and is also processed in a fast control path comprising the filter 59 and the DCM pulse width control block 58 for the DCM.

Filter 59 divides the voltage error signal $V_e$ into a steady state part $V_{e,ss}$ that is integrated by the integrator 55 to determine the steady state pulse width $t_{ss}$ and into a dynamic part $V_{e,d}$ that is processed by the DCM pulse width control block 58 to generate an additional on time $t_d$ that is added to the steady state pulse width $t_{ss}$ to determine the total pulse width for the DCM. Splitting the voltage error signal $v_e$ into the steady part $V_{e,ss}$ and the dynamic part $V_{e,d}$ removes the pole at zero that would be present in case of voltage mode control. As the steady state pulse width is set by the slow path, small signal control becomes simple linear control.

Pulse position control block 52 that is connected to the output of error amplifier 510 and ramp generator 56 and processes the voltage error signal $v_e$ to determine the pulse position which will be described further in connection with Fig. 6 - 14.

Fig. 6 refers to steady state pulse position modulation. Fig. 6 (top) shows the steady voltage error $V_{err}=V_{ss}$ and the cyclic ramp signal, generated by ramp generator 56 (Fig. 5), comprising a plurality of time-shifted voltage ramps having an identical slope, wherein the time elapsed between two consecutive voltage ramps at the same level, e.g. the level of the steady voltage error, is identical. The pulse position control block 52 (Fig. 5) determines the pulse position of the pulsed control signal as shown in Fig. 6 (middle) by triggering a pulse of the pulsed control signal when a ramp of the cyclic ramp signal intersects (equals) the voltage error signal as indicated by the dotted vertical lines. The nominal pulse width of the pulsed control signal is the steady state pulse width determined by integrator 55 (Fig. 5). Fig. 6 (bottom) shows the resulting inductor current which is a steady state current having a ripple.

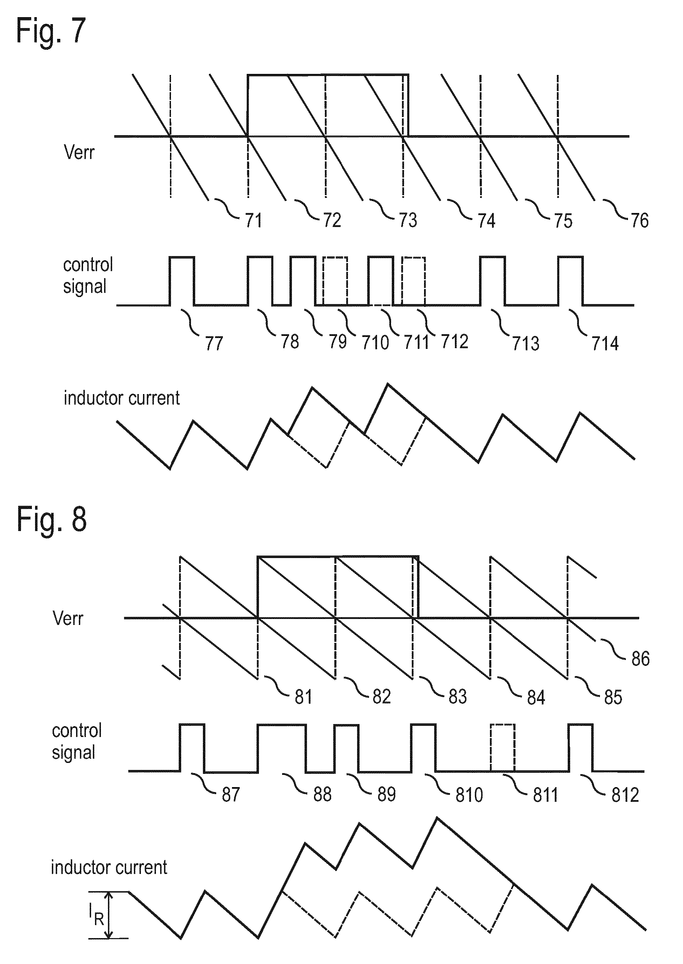

Fig. 7-12 refer to pulse translation modulation with a cyclic ramp signal having a pre-defined number of ramps per steady state cycle. Fig. 7 -12 (top) show the steady voltage error and cyclic ramp signal. The vertical dotted lines indicate when a steady state (dotted lined) pulse as shown in Fig. 7 - 12 (middle) would be triggered and two consecutive vertical lines represent boundaries of a (steady state) cycle. Fig. 7 - 12 (top) show the (fat lined) voltage error signal for a load transient and Fig. 7 -12 (middle) show the resulting (solid lined) pulsed control signal and in comparison the (dotted lined) steady state pulsed control signal. Fig. 7 - 12 (bottom) show the resulting dynamic (solid lined) inductor current in comparison to the (dotted lined) steady state inductor current.

Fig. 7 refers to pulse translation modulation with a cyclic ramp signal having one ramp per steady state cycle. Ramp 71 triggers pulse 77. Ramp 72 triggers pulse 78. Then a shift up in the voltage error occurs. Ramp 73 triggers pulse 79. Compared to the steady state in which ramp 73 would trigger steady state pulse 710, it can be observed that steady state pulse 710 is translated forward in time to the position of pulse 79 as ramp 73 intersects the voltage error earlier compared to the steady state voltage error. This increases the inductor current from the steady state inductor current to the dynamic inductor current. The same applies to steady state pulse 712 which is translated forward in time to the position of pulse 711 as ramp 74 intersects the voltage error earlier compared to the steady state voltage error. Then a shift down in the voltage error occurs. As pulses are only translated in time, it allows the inductor current to return to its steady state level as can be observed for the cycle bounded by ramps 74 and 75. As the voltage error returns to its steady state level, pulse 713 triggered by ramp 75 and pulse 714 triggered by ramp 76 correspond to their steady state counterparts.

It can be observed that a steady state pulse can be translated forward in time into the second half of the preceding steady state cycle. Hence, a ramp signal having a single ramp per cycle allows an extra pulse to start in the second half of a cycle. The maximum change in current is +/- ½*(1-d)*ripple current, wherein d is the nominal duty ratio.

Fig. 8 refers to pulse translation modulation with a cyclic ramp signal having two ramps per steady state cycle. Ramp 81 triggers pulse 87. Ramp 82 triggers pulse 88. However, at this instance of time a transient in the voltage error occurs and ramp 83 would trigger another pulse at the same instance of time. As pulse 88 is already present, instead of triggering another pulse at this instance of time, the duration of pulse 88 is merely extended by the nominal pulse width, i.e. the steady state pulse width. Hence, the resulting pulse width of pulse 88 is two times the steady state pulse width. The steady state pulse (not shown as overlapped by pulse 89) at the position of pulse 89 is thus translated forwarded into the first half of the steady state cycle bounded by ramps 82 and 83. Ramp 84 triggers pulse 89. The steady state pulse (not shown as overlapped by pulse 810) at the position of pulse 810 is thus translated forwarded to the position of pulse 89.

Then, ramp 85 triggers pulse 810. The steady pulse 811 is thus translated forward in time to the position of pulse 810. Then the error voltage returns to its steady state level. Even though ramp 85 intersects the error voltage again at the steady state level it does not trigger another pulse. As ramp 85 has already triggered a pulse, that is pulse 810, the ramp is discarded from then on. Otherwise it would trigger a pulse at the position of steady pulse 811 which is undesirable as it would prevent the inductor current from returning to its steady state level. In comparison to the single ramp method as shown in Fig. 7 it can be observed that the resulting dynamic inductor current reaches higher levels. As the voltage error returns has returned to its steady state level, pulse 812 triggered by ramp 86 corresponds to its steady state counterpart.

It can be observed that a steady state pulse can be translated forward in time into the first half of the preceding steady state cycle. Hence, a ramp signal having two ramps per cycle allows an extra pulse to start anywhere in the cycle. The maximum change in current is +/- 1/(1-d)*ripple current, wherein d is the nominal duty ratio.

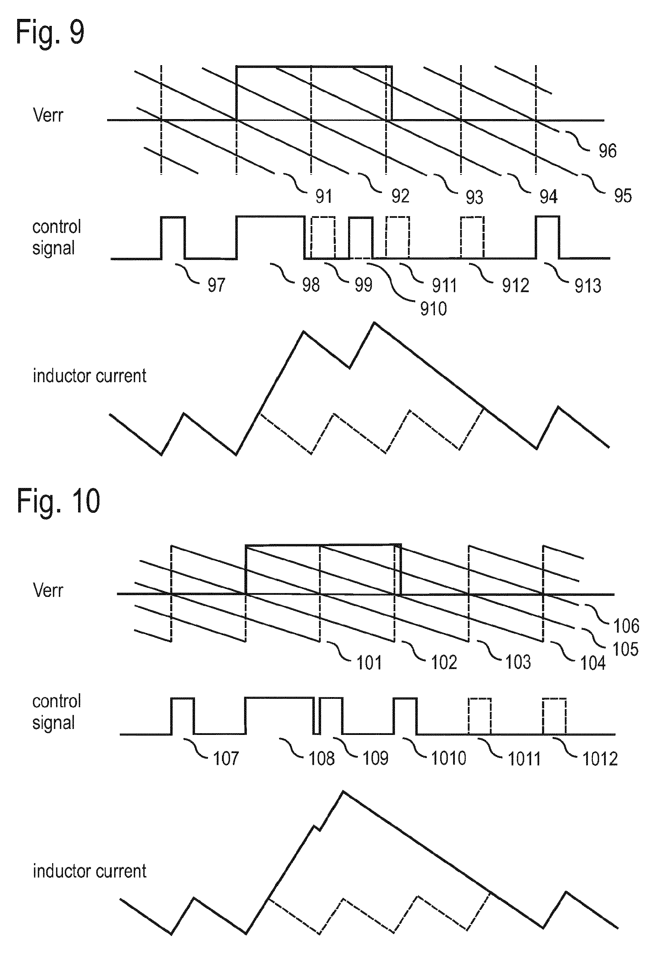

Fig. 9 refers to pulse translation modulation with a cyclic ramp signal having three ramps per steady state cycle. Ramp 91 triggers pulse 97. Ramp 92 triggers pulse 98. However, at this instance of time a transient in the voltage error occurs and ramp 93 would trigger another pulse at the same instance of time. As pulse 98 is already present, instead of triggering another pulse at this instance of time, the duration of pulse 88 is merely extended by the nominal pulse width, i.e. the steady state pulse width. Hence, the resulting pulse width of pulse 98 is now two times the steady state pulse width. At an instance when the thus extended pulse 98 is still present ramp 94 intersects the voltage error. Instead of triggering another pulse at this instance of time, the extended pulse 98 is extended again so the total pulse width of pulse 98 becomes three times the nominal pulse width, i.e. the steady state pulse width.

Thus, steady pulses 99 and 911 have been translated forward in time to generate pulse 98, hence, into the steady cycle bounded by ramps 92 and 93. Thus, a ramp signal having three ramps per cycle allows an extra pulse anywhere in the cycle and an extra pulse in the second half of the cycle. The inductor current can reach even higher levels compared to Fig. 8 showing the scenario for two ramps.

Ramp 95 triggers pulse 910 which corresponds to steady state pulse 912 that is translated forward in time to the position of pulse 910. Then the error voltage returns to its steady state level. Even though ramp 95 intersects the error voltage again at the steady state level it does not trigger another pulse. As ramp 95 has already triggered a pulse, that is pulse 910, the ramp is discarded from then on to guarantee stability of the control method. As the voltage error signal has returned to its steady state level, pulse 913 triggered by ramp 96 corresponds to its steady state counterpart.

Fig. 10 refers to pulse translation modulation with a cyclic ramp signal having four ramps per steady state cycle. Ramp 101 triggers pulse 107. Ramp 102 triggers pulse 108. However, at this instance of time a transient in the voltage error occurs and ramp 103 and ramp 104 would each trigger another pulse at the same instance of time. As pulse 108 is already present, instead of triggering the two other pulses at this instance of time, the duration of pulse 108 is merely extended by twice the nominal pulse width, i.e. twice the steady state pulse width. Hence, the resulting pulse width of pulse 108 now is three times the steady state pulse width.

Steady state pulses (not shown as overlapped by pulses 109 and 110) at the positions of pulse 109 and 110 are thus translated forwarded to the position of pulse 108, hence, into the steady cycle bounded by ramps 102 and 103. Thus, a ramp signal having four ramps per cycle allows two extra pulses anywhere in the cycle. The inductor current can reach even higher levels compared to Fig. 9 showing the scenario for three ramps.

Ramp 104 triggers pulse 109 which corresponds to steady state pulse 111 that is translated forward in time to the position of pulse 109. Ramp 105 triggers pulse 109 which corresponds to steady state pulse 1011 that is translated forward in time to the position of pulse 109. Ramp 106 triggers pulse 1010 which corresponds to steady state pulse 1012 that is translated forward in time to the position of pulse 1010. Then the error voltage signal returns to its steady state level. Even though ramp 105 intersects the error voltage signal again at the steady state level it does not trigger another pulse. As ramp 105 has formerly intersected the voltage error signal to extend the pulse width of pulse 108, the ramp is discarded from then on to guarantee stability of the control method. Even though ramp 106 intersects the error voltage again at the steady state level it does not trigger another pulse. As ramp 106 has already triggered a pulse, that is pulse 1010, the ramp is also discarded from then on to guarantee stability of the control method.

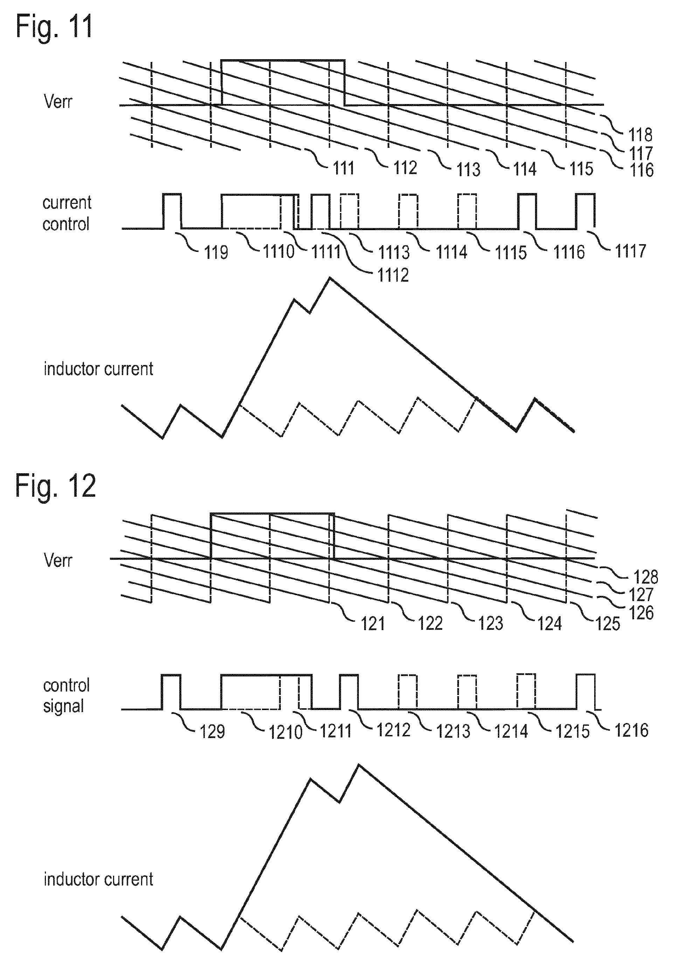

Fig. 11 refers to pulse translation modulation with a cyclic ramp signal having five ramps per steady state cycle. Ramp 111 triggers pulse 119. Ramp 112 triggers pulse 1110. However, at this instance of time a transient in the voltage error occurs and ramp 113 and ramp 114 would each trigger another pulse at the same instance of time. As pulse 1110 is already present, instead of triggering the two other pulses at this instance of time, the duration of pulse 1110 is merely extended by twice the nominal pulse width, i.e. twice the steady state pulse width. Hence, the resulting pulse width of pulse 1110 now is three times the steady state pulse width. However, at an instance of time when the thus extended pulse 1110 is still present ramp 114 intersects the voltage error signal. This results in another extension of the pulse width of pulse 1110 by a nominal pulse width, i.e. the steady pulse width. In the end, the pulse width of pulse 1110 is four times the steady state pulse width.

Steady state pulses 1111, 1113 and 1114 are thus translated forwarded to the position of pulse 1110, hence, into the steady cycle bounded by ramps 112 and 113. Thus, a ramp signal having four ramps per cycle allows two extra pulses anywhere in the cycle plus an extra pulse in the second half of the cycle. The inductor current can reach even higher levels compared to Fig. 10 showing the scenario for four ramps.

Ramp 104 triggers pulse 109 which corresponds to steady state pulse 111 that is translated forward in time to the position of pulse 109. Ramp 116 triggers pulse 1112 which corresponds to steady state pulse 1115 that is translated forward in time to the position of pulse 1112. Then the error voltage signal returns to its steady state level. Even though ramp 115 and ramp 116 intersects the error voltage signal again at the steady state level they do not trigger each another pulse. As ramps 115 and 116 have formerly intersected the voltage error signal, these ramps are discarded from then on to guarantee stability of the control method. As the voltage error signal has returned to its steady state level, pulse 1116 triggered by ramp 117 and pulse 1117 triggered by ramp 118 correspond to their steady state counterparts.

Fig. 12 refers to pulse translation modulation with a cyclic ramp signal having six ramps per steady state cycle. Ramp 121 triggers pulse 129. Ramp 122 triggers pulse 1210. However, at this instance of time a transient in the voltage error occurs and ramp 123, 124 and 125 would each trigger another pulse at the same instance of time. As pulse 1210 is already present, instead of triggering the three other pulses at this instance of time, the duration of pulse 1210 is merely extended by three times the nominal pulse width, i.e. three times the steady state pulse width. Hence, the resulting pulse width of pulse 1210 now is four times the steady state pulse width. However, at an instance of time when the thus extended pulse 1210 is still present, ramp 126 intersects the voltage error signal. This results in another extension of the pulse width of pulse 1210 by a nominal pulse width, i.e. the steady pulse width. In the end, the pulse width of pulse 1210 is five times the steady state pulse width.

Steady state pulse 1211, steady state pulse at position of pulse 1212 (not shown because it is overlapped by pulse 1212) and steady state pulses 1213 and 1214 are thus translated forwarded to the position of pulse 1210, hence, into the steady cycle bounded by ramps 122 and 123. Thus, a ramp signal having five ramps per cycle allows three extra pulses anywhere in the cycle. The inductor current can reach even higher levels compared to Fig. 11 showing the scenario for five ramps.

Ramp 127 triggers pulse 1212 which corresponds to steady state pulse 1215 that is translated forward in time to the position of pulse 1212. Then the error voltage signal returns to its steady state level. Even though ramps 125, 126 and 127 intersect the error voltage signal again at the steady state level, they do not trigger each another pulse. As ramps 125, 126 and 127 have formerly intersected the voltage error signal, these ramps are discarded from then on to guarantee stability of the control method. As the voltage error signal has returned to its steady state level, pulse 1216 triggered by ramp 128 corresponds to its steady state counterpart.

When comparing the slope of the ramps in Fig. 6 - 12, it can be observed that an increasing number of ramps at any instance of time within the steady state cycle can be generated by decreasing the slope accordingly.

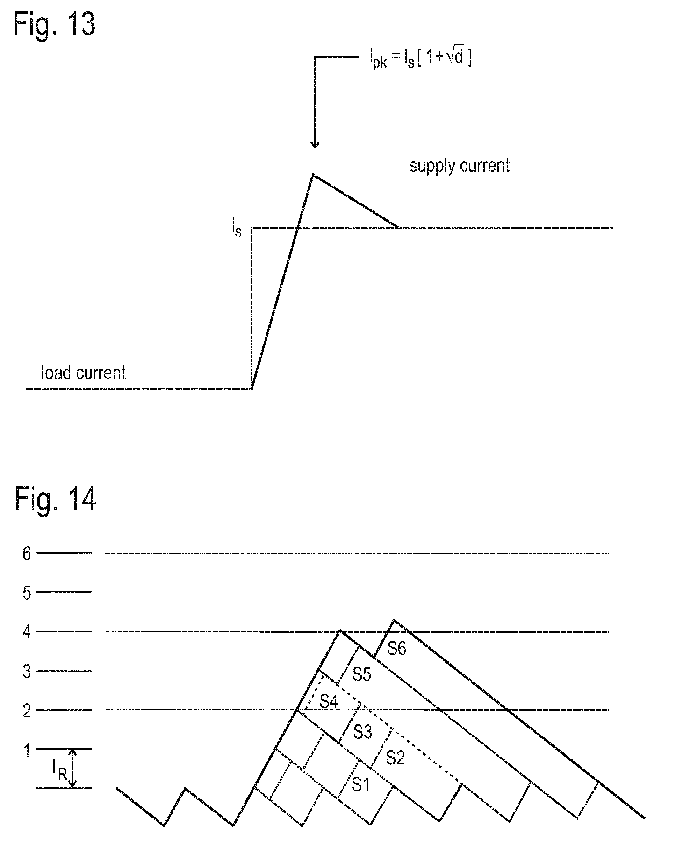

Fig. 13 shows a maximum current required to correct a voltage deviation in minimum time for a minimum latency system which is given by: $I_{pk} = I_s[1 + \sqrt{d}]$, wherein $I_s$ is the supply current. For example, if the input voltage is 12 Volts and the output voltage is 1 Volt and the ripple current $I_R$ is 30% of a maximum load (supply) current, then a 50% load step would require a peak inductor current that is 2.15 times the ripple current.

Fig. 14 shows a comparison of the inductor current that can be reached in dependence of the number of ramps, wherein the integer following the letter S indicates the number of ramps per cycle of the cyclic ramp signal. From the maximum shift in the inductor current from its steady state level $I_{shiftmax}$ in terms of multiples of the ripple current $I_R$, the number of ramps N needed to reach the maximum inductor current required to correct for a voltage deviation can be determined from $I_{shiftmax} = I_R N/2$ (1-d) for $d \leq \frac{1}{2}$ or $I_{shiftmax} = I_R N$ for $d \geq \frac{1}{2}$, wherein d is the duty ratio of the pulsed control signal.

Now returning to Fig. 5, it can be observed that the controller comprises a pulses position neutralizer 57 arranged between the pulse position control block 52 and the pulse width control block 53. Now referring to Fig. 4, it can be observed that a steady state shift in the voltage error leads to a steady shift in current $t_d$ for each pulse that is given by $\Delta I = t_d V_{out}/L$. The pulse position neutralizer 57 attempts to detect any steady state shifts in current and neutralizes these steady state shifts by increasing the steady state pulse width $t_{ss}$ according to $t'_{ss} = t_{ss} + k t_{d-1}$, wherein k is a constant.

As already pointed out, the power converter can be operated either in CCM or in DCM. CCM means that the current in the energy transfer inductor substantially never goes to zero between switching cycles, although it may momentarily go through zero while transitioning from a positive to negative current or negative to positive current. In DCM, the current goes to zero during a substantial part of the switching cycle.

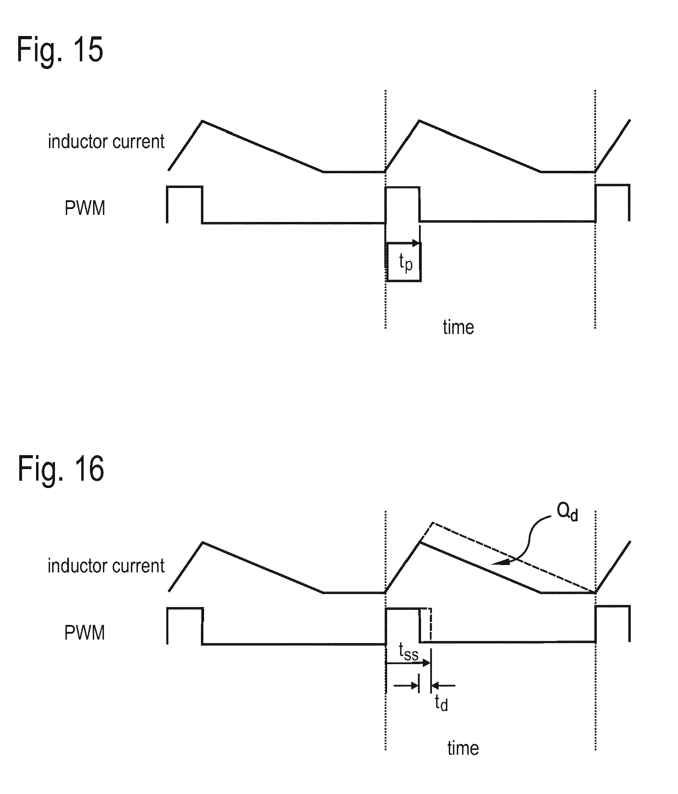

Fig. 15 and 16 refer to the operation of the DCM pulse width control block. In CCM, the nominal pulse width is the steady pulse width that might be adjusted slowly over time to correct for any steady state shifts in current. In DCM, the pulse width is adjusted dynamically to increase or decrease the charge in a cycle.

As a predictive method of charge mode control, the DCM pulse width control block 58 (Fig. 5) varies the pulse width of the pulsed control signal such that a resulting charge Q in a cycle is given by $Q = \dfrac{V_{in} - V_{out}}{2L}\left(\dfrac{V_{in}}{V_{out}}\right) t_p^2$, wherein the total pulse width $t_p$ of the pulsed control signal versus the resulting inductor current is shown in Fig. 14.

As the integrator 55 (Fig. 5) determines the steady pulse width $t_{ss}$, the DCM pulse width control block 58 (Fig. 5) needs to determine only an additional on-time $t_d$ as indicated by the dotted lined pulse in Fig. 16 to augment the steady state pulse width $t_{ss}$ such that an additional charge $Q_d$ in a cycle as given by

$$Q_d = \frac{V_{in} - V_{out}}{2L}\left(\frac{V_{in}}{V_{out}}\right) t_d [2t_{ss} - t_d] \approx \frac{V_{in} - V_{out}}{2L}\left(\frac{V_{in}}{V_{out}}\right) t_d t_{ss}$$ results.

The effect on the inductor current is also shown in Fig. 16. It can be observed that the charge in the cycle increases to an extent which is proportional to the area bounded by the dotted line and the solid line of the inductor current.

In DCM, the method reduces time and effort otherwise needed to compensate, as no compensation is necessary. Thus, the method specifically improves the transition from DCM to CCM and thus results in a more robust power converter.

Now referring back to Fig. 5, the basic architecture of the controller can be fully digital requiring a fast analog to digital converter connected to the output of error amplifier 510. Alternatively, the basic architecture may be implemented in mixed signal requiring only a slow analog to digital converter connected to the output of the error amplifier 510. Specifically, the pulse position control block 52 and the DCM pulse width control block 58 may be implemented analog.

However, the analog/digital boundary can be drawn arbitrarily to optimize performance, cost, etc.

## Claims

1. A control method for a power converter comprising a switched power stage configured to generate an output voltage from an input voltage according to a pulsed control signal controlling a switching of the switched power stage in dependence of a voltage error signal, the voltage error signal being a difference between a reference voltage and the output voltage, the method comprising:

   generating a cyclic ramp signal;
   generating the pulsed control signal by triggering a pulse of the pulsed control signal when a ramp of the cyclic ramp signal intersects the voltage error signal to control a pulse position.

2. The control method according to claim 1, wherein
   triggering a pulse of the pulsed control signal comprises discarding a ramp of the cyclic ramp signal when the ramp has formerly intersected the voltage error signal.

3. The control method according to claim 1 comprising:

    determining a steady state pulse width of a pulse of the pulsed control signal by integrating a steady state voltage error signal.

4. The control method according to claim 3, wherein determining the steady pulse width comprises

    determining the steady state pulse width prior to generating the pulsed control signal and setting a nominal pulse width of the pulsed control signal to the steady state pulse width.

5. The control method according to claim 1, wherein generating a cyclic ramp signal comprises generating a plurality of time-shifted voltage ramps having an identical slope, wherein the time elapsed between two consecutive voltage ramps at the same level is identical.

6. The control method according to claim 1, wherein generating a cyclic ramp signal comprises

    generating the cyclic ramp signal such that a predefined number of ramps is present at any instance of time within a steady state cycle of the cyclic ramp signal, wherein the steady state cycle is defined as the time elapsed between two consecutive pulses of the pulsed control signal at the same level generated for a steady state voltage error signal.

7. The control method according 6, wherein generating the cyclic ramp signal comprises

    adjusting a slope of all ramps of the cyclic ramp signal such that the predefined number of ramps is present at any instance of time within the steady state cycle of the cyclic ramp signal.

8. The control method according to claim 1 comprising:

    extending the duration of a pulse of the pulsed control signal by a nominal pulse width instead of triggering a pulse of the pulsed control signal for each additional ramp of the cyclic ramp signal intersecting the voltage error signal at an instance of time when a pulse of the pulsed control signal is present.

9. The control method according to claim 1 further comprising:

    attempting to detect a steady state or a quasi-steady state shift in current; and adjusting the nominal pulse width to offset a pulse translation resulting from a steady state or quasi-steady state shift when a steady state or quasi-steady state shift has been detected.

10. The control method according to claim 1 further comprising:

    varying a pulse width of the pulsed control signal so that a square of the pulse width yields a charge to be delivered in a cycle in dependence of a voltage error, wherein the charge to be delivered in a cycle depends on the voltage error and the square of the pulse width.

11. The control method according to claim 10 comprising:

    varying the pulse width of the pulsed control signal such that a resulting charge Q of a cycle is given by

$$Q = \frac{V_{in} - V_{out}}{2L} \left( \frac{V_{in}}{V_{out}} \right) t_p^2$$

,

wherein $V_{in}$ is the input voltage, $V_{out}$ is the output voltage, L is an inductance of the switchable power stage and $t_p$ is the pulse width of the pulsed control signal.

12. The control method according to claim 10 comprising:

varying the pulse width of the pulse control signal by augmenting a steady state pulse width $t_{ss}$ by an additional on-time $t_d$ such that an additional charge $Q_d$ of a cycle is given by $Q_d = \dfrac{V_{in} - V_{out}}{2L}\left(\dfrac{V_{in}}{V_{out}}\right) t_d t_{ss}$ when the steady state pulse width $t_{ss}$ is determined otherwise.

13. Power converter comprising
a switched power stage configured to generate an output voltage from an input voltage and
a controller configured to generate a pulsed control signal for switching the switched power stage in dependence of a voltage error signal, the voltage error signal being a difference between a reference voltage and the output voltage; wherein the controller is configured to generate a cyclic ramp signal and wherein the controller is configured to generate the pulsed control signal by triggering a pulse of the pulsed control signal when a ramp of the cyclic ramp signal equals the voltage error signal to control a pulse position.

14. The power converter according to claim 13, wherein the controller comprises:

a filter configured to divide the voltage error signal into a steady state part and into a dynamic part;
an integrator configured to integrate the steady state part of the voltage error signal to determine a steady state pulse width;
a discontinuous conduction mode pulse (DCM) width control block configured to determine an additional on-time of the pulse by means of predictive charge mode control;
a pulse width control block connected to the integrator and the DCM pulse width control block configured to determine a pulse width based on the steady state pulse width and the additional on-time;
a ramp generator configured to generate the cyclic ramp signal;
a pulse position control block configured to determine a pulse position by triggering a pulse when a ramp of the cyclic ramp signal equals the voltage error signal; and
a pulse generator connected to the pulse width control block and the pulse position control block configured to generate the pulsed control signal based on the pulse width and the pulse position.

15. The power converter according to claim 14, wherein the controller further comprises:

a pulse position neutralizer connected between the pulse position control block and the pulse width control block and being configured to attempting to detect a steady state or a quasi-steady state shift in current; and
to adjusting the nominal pulse width to offset a pulse translation resulting from a steady state or quasi-steady state shift when a steady state or quasi-steady state shift has been detected.

# Fig. 1

# Fig. 2

inductor current
PWM

Steady State (a)

Steady State shift (step function) in duty cycle causes ramp of current (b)

One cycle (impulse) shift in duty cycle causes step in current (c)

# Fig. 3

inductor current

PWM

Steady State     (a)

inductor current

PWM

Pulse Advance
increases charge     (b)
in a cycle

inductor current

PWM

Pulse Retard
decreases charge     (c)
in a cycle

time

# Fig. 4

inductor current

PWM

Steady State     (a)

$$\Delta I = t_d \frac{V_{out}}{L}$$

$t_{ss}$

steady state
duty cycle

Pulse Advance
increases charge     (b)
in a cycle

inductor current

PWM

shift

$t_d$

## Fig. 5

pulsed
control
signal

## Fig. 6

# Fig. 7

Verr

71  72  73  74  75  76

control
signal

77  78  79  710  711  712  713  714

inductor current

# Fig. 8

Verr

81  82  83  84  85

86

control
signal

87  88  89  810  811  812

inductor current

$I_R$

# Fig. 9

Verr

96
91  92  93  94  95

control
signal

97  98  99  911  912  913
910

inductor current

# Fig. 10

Verr

106
105
101  102  103  104

control
signal

107  108  109  1010  1011  1012

inductor current

# Fig. 11

# Fig. 12

17

Fig. 13

$$I_{pk} = I_s [ 1 + \sqrt{d} ]$$

supply current

$I_s$

load current

Fig. 14

6

5

4

3

$S6$

$S5$

2

$S4$

$S3$

$S2$

1

$I_R$

$S1$

Fig. 15

inductor current

PWM

$t_p$

time

Fig. 16

$Q_d$

inductor current

PWM

$t_{ss}$

$t_d$

time

**EP 3 059 844 A1**

Europäisches
Patentamt

European
Patent Office

Office européen
des brevets

# EUROPEAN SEARCH REPORT

Application Number

EP 16 15 1462

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | EP 1 691 473 A2 (INTERSIL INC [US]) 16 August 2006 (2006-08-16) | 1,2,5-13 | INV. H02M3/158 |
| Y | * paragraph [0035] - paragraph [0051] * * figures 4-10 * | 3,4,14, 15 | ADD. H02M3/156 |
| Y | US 2010/102785 A1 (YOUNG CHRIS M [US]) 29 April 2010 (2010-04-29) * paragraph [0018] * * paragraph [0021] - paragraph [0032] * * figures 4,5 * | 3,4,14, 15 | |
| A | US 2014/333270 A1 (YOUNG CHRIS M [US] ET AL) 13 November 2014 (2014-11-13) * the whole document * | 1-15 | |
| A | TANG W ET AL: "Charge control: modeling, analysis and design", PROCEEDINGS OF THE ANNUAL POWER ELECTRONICS SPECIALISTS CONFERENCE (PESC). TOLEDO, JUNE 29 - JULY 3, 1992; [PROCEEDINGS OF THE ANNUAL POWER ELECTRONICS SPECIALISTS CONFERENCE (PESC)], NEW YORK, IEEE, US, vol. CONF. 23, 29 June 1992 (1992-06-29), pages 503-511, XP010064874, DOI: 10.1109/PESC.1992.254839 ISBN: 978-0-7803-0695-0 * the whole document * | 10-12,14 | |

TECHNICAL FIELDS
SEARCHED (IPC)

H02M

The present search report has been drawn up for all claims

| Place of search | Date of completion of the search | Examiner |
|---|---|---|
| The Hague | 13 July 2016 | Lochhead, Steven |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
& : member of the same patent family, corresponding document

EPO FORM 1503 03.82 (P04C01)

20

## EP 3 059 844 A1

This annex lists the patent family members relating to the patent documents cited in the above-mentioned European search report.
The members are as contained in the European Patent Office EDP file on
The European Patent Office is in no way liable for these particulars which are merely given for the purpose of information.

13-07-2016

| Patent document cited in search report | | Publication date | Patent family member(s) | | Publication date |
|---|---|---|---|---|---|
| EP 1691473 | A2 | 16-08-2006 | EP 1691473 A2 | | 16-08-2006 |
| | | | TW I301701 B | | 01-10-2008 |
| | | | US 2007013356 A1 | | 18-01-2007 |
| US 2010102785 | A1 | 29-04-2010 | CN 101753034 A | | 23-06-2010 |
| | | | DE 202009013410 U1 | | 29-07-2010 |
| | | | TW 201027888 A | | 16-07-2010 |
| | | | US 2010102785 A1 | | 29-04-2010 |
| US 2014333270 | A1 | 13-11-2014 | TW 201508435 A | | 01-03-2015 |
| | | | US 2014333270 A1 | | 13-11-2014 |

EPO FORM P0459

For more details about this annex : see Official Journal of the European Patent Office, No. 12/82